# EUROPEAN PATENT SPECIFICATION

(11) **EP 4 001 442 B1**
(45) Date of publication and mention of the grant of the patent: **21.10.2026**
(21) Application number: 21020565.4
(22) Date of filing: 12.11.2021
(51) Int. Cl.: C22B 1/24, C22B 1/244, C22B 7/02, C21B 3/04

(54) **METHOD FOR BRICKETING DUST CAPTURED IN THE DESULPHURISATION AND LADLE FURNACE DUST COLLECTION SYSTEM**
VERFAHREN ZUR HERSTELLUNG VON BRIKETTS AUS IN EINEM ENTSCHWEFELUNGS- UND PFANNENOFENSTAUBSAMMELSYSTEM ABGESCHIEDENEN STAUB
PROCÉDÉ DE BRICKETAGE DES POUSSIÈRES CAPTÉES DANS LE SYSTÈME DE DÉSULFURATION ET DE COLLECTE DES POUSSIÈRES DES FOURS DE POCHE

(30) Priority: 13.11.2020 TR 202018156
(43) Date of publication of application: 25.05.2022
(73) Proprietor: Eregli Demir ve Celik Fabrikalari T.A.S., 67330 Zonguldak (TR)
(72) Inventor: Parlak, Ferhat, 67330 Zonguldak (TR); Yilmaz, Idris, 67330 Zonguldak (TR); Daldal, Selda, 67330 Zonguldak (TR); Turkyilmaz, Serhat, 67330 Zonguldak (TR); Keler, Memduh Kagan, 67330 Zonguldak (TR); Çetin, Zafer, 67330 Zonguldak (TR)
(74) Representative: Yalçiner Patent and Consulting Ltd.

(56) References cited:
- KR-B1- 102 271 524
- US-A- 5 100 464

## Description

### Technical Field

The present invention relates to the briquetting of the powders collected in the desulfurization (DeS) and ladle furnace (LF) dust collection system by agglomerating with the steel mill sludge and making them ready for use in the basic oxygen furnace process.

### State of the Art

Raw materials are stored at the factory solid waste landfill and cause dusting, especially due to the small particle sizes of the desulfurization and ladle furnace dust collection system dusts. In addition, it brings high inventory costs as it is stocked in large areas. Therefore, these powders must be recycled.

Iron, calcium, silicon, etc., which occur in iron and steel processes. Advantages such as reducing environmental pollution, reducing stock costs, reducing stock areas and reducing raw material costs are provided with the re-evaluation of waste materials rich in elements such as iron, calcium, silicon, which occur in iron and steel processes.

In this context, powders must be subjected to agglomeration process in order to be usable in processes. Agglomerated products (briquettes or pellets) can have different areas of use in the iron and steel industry, depending on their chemical composition and size. Produced agglomerated parts are used in certain processes according to their chemical content, mechanical properties, thermal and physical behavior.

Briquettes are preferred among the agglomeration methods, which are more suitable for the use in the invention. Briquettes are agglomerated products obtained by blending powder or granular particles with suitable binders and compressing them under a certain pressure. Certain quality tests are applied for the use of briquettes in the iron and steel industry, and whether the tested briquettes meet the needs is tested. Within the scope of the requirements, the following quality tests are applied to the briquettes.
- Compressive Strength Test
- Drop Test
- Tumbler Test

Mentioned mechanical tests are generally; Compressive strength test-drop test, compression strength test-tumbler test, drop test-tumbler test are performed in binary combinations or as a single.

In the literature search, a Japanese patent application with the publication number JP2011208256A and titled with "Method for Agglomeration of Powdery Raw Material", was found.

This patent document deals with the molding or granulation of raw materials such as moisture-containing powder and steel slag. The aim is to produce the agglomerated or granule efficiently, with high yield and quality at low cost, without equipment failure and quality defect due to moisture. The slag used as the main material in the patent can be desulphurization slag or converter decarburization slag. The raw material contains approximately 15% moisture before processing. As a connector; blast furnace slag, cement and fly ash were used. Before the briquetting process, a curing process is carried out on the blend that has become a mixture. 150 g of blast furnace slag was added as binder to 850 g of Desulphurization slag with 15% moisture content. Then, due to the high moisture content of the blend, this blend was cured for 1 day. A second attempt was made at the same proportions, but instead of blast furnace slag, portland cement was used as a binder.

Another application encountered in the patent search of the prior art is the patent with the publication number CN100463982C titled "Hardening of Steel Mill Powder by Agglomeration Method".

This invention relates to the reuse of waste materials from electric furnaces in the steelmaking process, and the vertical press briquetting method was used. The diameter of the briquettes produced in the form of cylinders varies between 30-100 mm. Steel mill dust and a carbon-containing raw material (pulverized coal or graphite) are used as the main material. Steelmaking dust and a carbon-containing raw material (pulverized coal or graphite) were used as the main material. The carbon-containing raw material is included in the mixture at the rate of 1-40% of the main component. The humidity of the mixture is kept at 3-8%. The size ratio of the produced briquette; Briquette height: Briquette diameter = varies between 0.3 - 1.5. The moisture content of the raw material varies between 0.5 and 15%.

Another application encountered during the literature search is the patent numbered US2007163388A1 titled "Hardening of Steel Mill Powder by Agglomeration Method".

In the invention that numbered US2007163388A1, the diameter of the agglomerated piece produced is between 50-100 mm and its height is between 30-80 mm. The agglomeration process is done by the vertical press briquetting method.

Another application encountered during the literature search is the patent numbered KR101368407B1 titled "Use of Steel Powder as Pellets and Pellet Composition".

In this invention, the ratios of the raw materials studied; 90-97% of the steel mill powder, 2-7% of the binder in the form of inorganic powder, 1-3% of the binder in the form of liquid. The inorganic binder mentioned here consists of cement, quicklime, and sodium polyacrylate materials. Binder in powder form; It contains 70-89.9% cement (preferably portland cement), 10-29% quicklime and 0.1-1% sodium polyacrylate. As a liquid binder; polyvinyl alcohol, polyvinyl acetate, or ethylene-vinyl acetate are used, but more polyvinyl alcohol is preferred.

Another application encountered in the patent search of the prior art is the patent with the publication number CN109266840A titled "Pellet and Production Methods".

In the invention, the pelleting process was carried out by homogeneously mixing and agglomerating a residual iron-containing material and desulphurization ash mixture. The content of the blend that is subjected to the pelletizing process; is a 2-4% desulphurization ash mixture and 96-98% iron-containing powder material. The moisture content of the iron-containing powder material is between 7-9%. The desulphurization ash mixture consists of desulphurization ash and bentonite. The ratio of desulphurization ash in this mixture is between 5-30%. Thus, the use of bentonite is reduced. The iron content of the iron-containing powder material is more than 66% by weight. The grain sizes of both materials used in pelleting are smaller than 77µ. Produced pellets; are preheated for 5-10 minutes between 900-1100 °C. Then they are calcined at 1200-1300 °C for approximately 7-16 minutes.

Another application encountered during the literature search is the patent numbered CN108411104A titled "Recycling Method of Desulfurized Fly Ash Based on Thermal Decomposition with Low Energy Consumption".

The purpose of this invention is to agglomerate desulphurization ash and an iron-containing raw material, and then perform drying, roasting, and cooling processes, to benefit from the desulfurization ash and to provide its decomposition. Desulphurization ash is a kind of solid waste generated during the flue gas desulphurization process. The magnetite ratio of the desulphurization ash to be used in the pelleting process is 17:20. Approximately 46% of desulphurization ash and 54% of magnetite are used. The produced pellets are subjected to a drying process at approximately 100 °C for 6 minutes. The free water contained in the pellet is thus removed. Then, the drying process is carried out for 6 more minutes at 400 °C. After the drying process is completed, the pellets then enter the roasting process, where the roasting process is carried out at 1100 °C for 15 minutes. The calcined pellets are then left to dry.

Patent documents US 5 100 464 A and KR 102 271 524 B1 further disclose a method for recycling dusts from desulphurization and ladle treatment.

### Technical Problems That the Invention Aims to Solve

The present invention relates to the briquetting of desulphurization (DeS) dust collected in the dust collection system of the steelmaking desulfurization plants and the ladle furnace (LF) dust collected in the ladle furnace dust collection system by agglomerating with the steelmaking sludge and making them ready for use in the basic oxygen furnace (BOF) process. The present invention as defined in claim 1 relates to the briquetting of dusts captured in the desulphurization and ladle furnace dust collection system.

The problem that the invention aims to solve is to save storage space since DeS dusts collected in the dust collection system of steelmaking desulfurization plants and LF dust collected in the ladle furnace dust collection system occupy a lot of space. Before the invention, the materials collected in the dust collection system are stored in the factory area and cause dusting especially due to the small particle sizes of the desulfurization and ladle furnace dust collection system dust. In addition, it brings high inventory costs as it is stocked in large areas. Another problem that the invention aims to solve; is to ensure the recycling of steelwork sludge, desulfurization, and ladle furnace dust collection system dust. Due to the invention, materials with valuable chemical content in terms of production processes will be recycled into production by recycling the steelwork sludge, desulfurization, and ladle furnace dust collection system dust that are already openly stored in stocks. Thus, the cost of stocking is eliminated and the effects of the dust that gives to the environment will be minimized.

Another problem that current invention aims to solve; the recycling process of DeS and LF dust collecting system. Due to the invention, recycling the dusts of DeS and LF dust collecting system-which are mainly stored in an open atmosphere-will provide to gain the valuable chemical content in by-products. Storage cost of these materials can be eliminated. Detrimental effects for the environment, such as dust emission will be minimized.

### Explanation of Figures

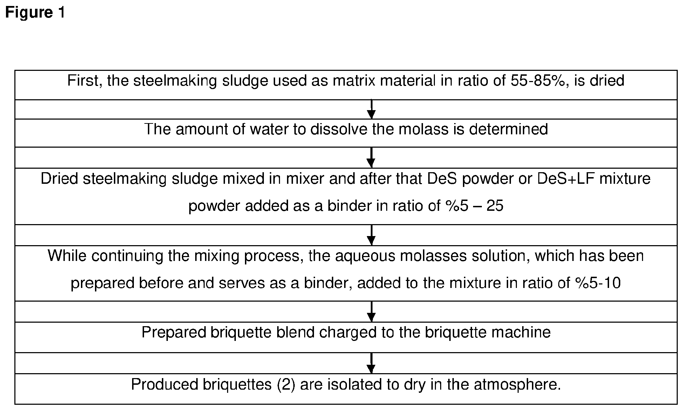

Figure 1: Flow Chart of the Method

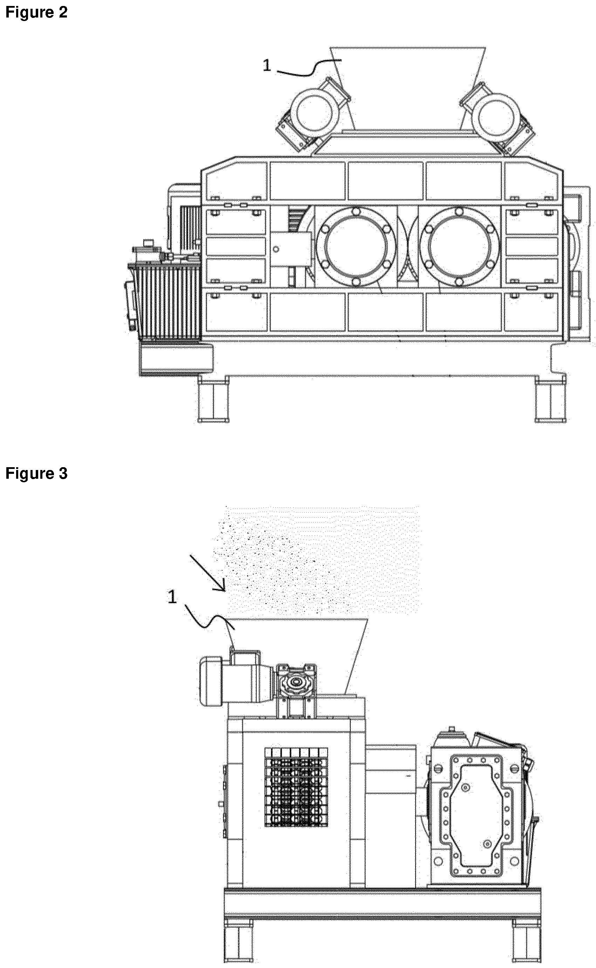

Figure 2: Intersection View of Roll Press Machine
Figure 3: Schematic View of the Charge of Prepared Briquette Mix to the Roll Press Briquette Machine

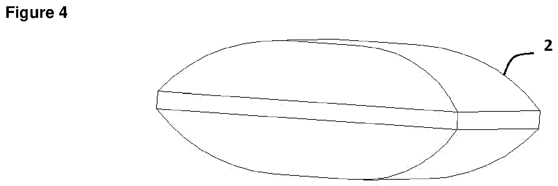

Figure 4: Perspective View of the Briquette

### Explanation of References in Figures

1 - Feeding Hole
2 - Briquette

### Disclosure of the Invention

In this description, the method of briquetting the DeS and LF dust collecting system dusts by agglomeration with the steelmaking process sludge are explained for a better understanding of the subject and without any limiting effect.

The invention relates to a method for recycling dusts which are captured in the desulphurization and ladle furnace dust collection system. Briquette machine includes feeding hole (1), briquette rollers, electric motor, reducer and hydraulic unit. The briquette machine is placed on a metal chassis. The rollers rotate at a certain speed by means of an electric motor. The switches that adjust the material input amount in the feeding hole (1) of the machine are set to a certain position. Piston pressure is brought to a certain level via the hydraulic unit of the machine. Then the blended material is fed to the roll presses from the upper part of the machine.

Although the briquetting machine used is of the roll press type, its main difference from the vertical press machines is that there are two porous cylinders parallel to each other and this allows to produce many briquettes (2) at the same time.

In the process of briquetting;
- First, the sludge-used as the main matrix- is dried in an oven at 105 °C so that the humidity can be below 7%.
- Moisture analysis is performed on dried sludges and it is confirmed that it is below 7%. After that, the drying process is continued for a while on material.
- According to the moisture analysis result, the amount of water is determined to dissolve the molass used as a binder in the briquetting process. In total, it is ensured that the humidity in the blend is 5-10%, preferably not exceeding 7%.
- The sludge is added in the mixer system for 20-30 minutes. Then DeS or DeS+LF dust materials, which are powder materials used as a binder in the mixture.
- While continuing the mixing process, the aqueous molasses solution, which has been prepared before and serves as a binder, is added to the mixture.
- Mixing process is continued with the mixer for about 10 more minutes and then the prepared mixture becomes ready to be charged into the briquetting machine.
- The pressure of the roll press briquette machine is being adjusted to 150-170 bar, the rotation speed is set to 15 rpm and the switch position of the feeding hole (1) of the machine is set to 2 cm.
- Prepared briquette blend is charged to the machine.
- The produced briquettes (2) are isolated to dry in the atmosphere.

In the present invention, DeS powder or DeS+LF mixture powder are used at rates between 5-25% by weight. The steelmaking sludge used as matrix material used between 55-85%. The moisture content of the blend was kept between 5-10%, and the ratio of molasses was between 5-10% by weight.

In order to make the blend material homogeneous, the binder material is distributed into matrix material with a compatible mixer. Then, the hydraulic unit of the briquette machine is brought to a certain pressure and the rotational speed of the machine's rolllers are set. After this operation, the prepared homogeneous blend is charged from the top of the briquetting machine to the roll pores. Dimension of pores in the machine are 7.5x25x35 mm. Products that take the shape of roll pores by compression are called briquettes (2).

These briquettes are subjected to the curing process in an open air atmosphere for approximately 3-4 weeks.

In the current process, scrap or iron ore pellets are used as cooling element. Briquettes (2) produced to replace them have a height of 15 mm, a width of 25 mm and a length of 35 mm. The size of the briquettes (2) produced is suitable for the process in which they will be used.

The compressive strength of the briquettes (2) to be used as a cooling element in the process is important. The briquettes (2) produced are exposed to many mechanical strengths from the briquette plant to the converter process. These mechanical strengths occur during the loading and unloading of briquettes (2) during transportation and transfers between conveyors. For this reason, the importance of briquette strength values depends on the process, and it is expected that the briquettes (2) will be resistant to fragmentation and abrasion until the converter process comes.

The mixing ratios of the materials used in the briquette blend are given in Table 1, and four experiments were conducted at the specified values. Until the blending ratios shown in the table are determined, the best strength and compression strength results are given in the table by making many experiments. When determining the mixing models, taking into account the particle sizes of the powder materials; Mixture models were tested by assuming that the steel plant sludge with a larger particle structure would act as a core, and the DeS dust collection system dust and DeS+LF dust collection system dust with a smaller particle size would act as adhering particles. Due to these properties, the sludge of the steel plant took more place in the blend, and dust collection system dusts were tried to be used as much as possible.

**Table 1**

| Experiment Number | Steel Plant Sludge by weight (%) | Molasses by weight (%) | DeS Dust by weight (%) | DeS+LF Dust by weight (%) | Moisture (%) | Compression Test (kgf) |
|---|---|---|---|---|---|---|
| 1 | 75 | 8 | 10 | - | 7 | 18,5 |
| 2 | 65 | 8 | 20 | - | 7 | 36,4 |
| 3 | 65 | 8 | - | 20 | 7 | 26,36 |
| 4 | 75 | 8 | - | 10 | 7 | 28,7 |

For the first experiment; The steel plant sludge, which was used as a raw material content of 75% by weight, was dried in an oven at 105 °C and according to the moisture analysis results, the amount of water to dissolve the molasses used as a binder in the briquetting process was determined and the humidity rate was set as 7%. The prepared steel plant sludge was mixed in the mixer for 20-30 minutes, and then 10% by weight DeS powder and 8% by weight molasses solution were added, which was used as binder. The mixing process was continued for about 10 minutes with the mixer and the prepared mixture was ready to be charged to the briquetting machine. The prepared briquette blend was charged to the roll press briquette machine. The briquettes (2) obtained were left to dry in the atmosphere. The value obtained as a result of the compression test applied to the briquettes is 18.5 kgf.

For the second experiment; The steel plant sludge, which was used as a raw material content of 65% by weight, was dried in an oven at 105 °C and according to the moisture analysis result, the amount of water to dissolve the molasses used as a binder in the briquetting process was determined and the humidity rate was set as 7%. The prepared steel plant sludge was mixed in the mixer for 20-30 minutes, and then 20% DeS by weight powder and 8% by weight molasses solution were added, which was used as binder. The mixing process was continued for about 10 minutes with the mixer and the prepared mixture was ready to be charged to the briquetting machine. The prepared briquette blend was charged to the roll press briquette machine. The briquettes (2) obtained were left to dry in the atmosphere. The value obtained as a result of the compression test applied to the briquettes is 36.4 kgf.

For the third experiment; The steel plant sludge, which was used as a raw material content of 65% by weight, was dried in an oven at 105 °C and according to the moisture analysis result, the amount of water to dissolve the molasses used as a binder in the briquetting process was determined and the humidity rate was set as 7%. The prepared steel plant sludge was mixed in the mixer for 20-30 minutes, and then 20% by weight DeS+LF powder and 8% by weight molasses solution were added, which was used as binder. The mixing process was continued for about 10 minutes with the mixer and the prepared mixture was ready to be charged to the briquetting machine. The prepared briquette blend was charged to the roll press briquette machine. The briquettes (2) obtained were left to dry in the atmosphere. The value obtained as a result of the compression test applied to the briquettes is 26.35 kgf.

For the fourth experiment; The steel plant sludge, which was used as a raw material content of 75% by weight, was dried in an oven at 105 °C and according to the moisture analysis result, the amount of water to dissolve the molasses used as a binder in the briquetting process was determined and the humidity rate was set as 7%. The prepared steel plant sludge was mixed in the mixer for 20-30 minutes, and then 10% DeS+LF powder and 8% by weight molasses solution were added, which was used as binder. The mixing process was continued for about 10 minutes with the mixer and the prepared mixture was ready to be charged to the briquetting machine. The prepared briquette blend was charged to the roll press briquette machine. The briquettes (2) obtained were left to dry in the atmosphere. The value obtained as a result of the compression test applied to the briquettes is 28.7 kg.

### Industrial Application of the Invention

This invention will be used in the production of briquettes (2) to be used in Basic Oxygen Furnace (BOF) processes by recycling the dusts captured in the desulphurization and ladle furnace dust collection system in the iron and steel industry.

## Claims

1. A method for recycling dusts which are captured in the desulphurization and ladle furnace dust collection system comprising the steps of; First, the steelmaking sludge used as matrix material in ratio of 55-85% by weight, is dried in drying oven at 105°C, wherein the moisture ratio of steelmaking sludge is kept under %7 by weight after drying process and the mass percentage of humidity in the blend, the amount of water where molasses is dissolved with steelmaking sludge, is in the ratio of 5-10% by weight, preferably not exceeding 7% by weight, the amount of water to dissolve a molass is determined, dried steelmaking sludge mixed in mixer between 20 - 30 minutes and after that desulphurization dust or desulphurization and ladle furnace mixture dust added as a binder in ratio of %5 - 25 by weight, while continuing the mixing process, the aqueous molasses solution, which has been prepared before and serves as a binder, added to the mixture and the mixture is mixed in mixer for 10 more minutes in ratio of %5-10 by weight, prepared briquette blend charged to the made in roll press briquetting machine, wherein the pressure of the roll press briquette machine is being adjusted to 150-170 bar, the rotation speed is set to 15 rpm and the switch position of the feeding hole (1) of the machine is set to 2 cm, and the produced briquettes (2) are isolated to dry in the atmosphere.

2. A method according to claim 1, wherein briquettes (2) have a height of 15 mm, a width of 25 mm and a length of 35 mm.

3. A method according to claim 1 or 2, wherein the briquettes are subjected to the curing process in an openair atmosphere for 3-4 weeks.

## Patentansprüche

1. Ein Verfahren zum Recycling von Stäuben, die im Entschwefelungs- und Pfannenofen-Staubabscheidungssystem aufgefangen werden, umfassend die folgenden Schritte: Zunächst wird der als Matrixmaterial verwendete Stahlwerksschlamm im Verhältnis von 55-85 Gew.-% im Trockenschrank bei 105°C getrocknet, wobei das Feuchtigkeitsverhältnis des Stahlwerksschlamms nach dem Trocknungsprozess unter 7 Gew.- % gehalten wird und der Massenanteil der Feuchtigkeit im Gemisch, die Menge an Wasser, in der Melasse mit Stahlwerksschlamm gelöst ist, im Verhältnis von 5-10 Gew.- %, vorzugsweise nicht mehr als 7 Gew.- %, die Menge an Wasser zum Lösen einer Melasse bestimmt wird, getrockneter Stahlwerksschlamm Mischung im Mischer zwischen 20 - 30 Minuten gemischt und danach Entschwefelungsstaub oder Entschwefelungs- und Pfannenofenmischungsstaub als Bindemittel im Verhältnis von 5 - 25 Gew.- % zugegeben, unter Fortsetzung des Mischprozesses die wässrige Melasselösung, die zuvor hergestellt wurde und als Bindemittel dient, der Mischung zugegeben und die Mischung im Mischer für weitere 10 Minuten im Verhältnis von 5 - 10 Gew.- % gemischt, Brikettgemisch hergestellt und der Brikettiermaschine zugeführt, wobei der Druck der Rollenpresse Brikettmaschine wird auf 150-170 bar eingestellt, die Drehzahl wird auf 15 U/min eingestellt und die Schaltposition der Zuführöffnung (1) der Maschine wird auf 2 cm eingestellt, und die produzierten Briketts (2) werden isoliert, um in der Atmosphäre zu trocknen.

2. Ein Verfahren nach Anspruch 1, wobei Briketts (2) eine Höhe von 15 mm, eine Breite von 25 mm und eine Länge von 35 mm aufweisen.

3. Ein Verfahren nach Anspruch 1 oder 2, wobei die Briketts dem Härtungsprozess in einer Freiluftatmosphäre für 3-4 Wochen unterzogen werden.

## Revendications

1. Procédé de recyclage des poussières captées dans le système de dépoussiérage du four de désulfuration et à poche, comprenant les étapes suivantes ;
Tout d'abord, les boues sidérurgiques utilisées comme matériau de matrice dans un rapport de 55-85 % en poids sont séchées dans un four de séchage à 105 °C, dans lequel le rapport d'humidité des boues sidérurgiques est maintenu en dessous de 7 % en poids après le processus de séchage, le pourcentage massique d'humidité dans l'assemblage et la quantité d'eau dans laquelle la mélasse est dissoute avec des boues sidérurgiques sont dans un rapport de 5-10 % en poids, de préférence ne dépassant pas 7 % en poids, la quantité d'eau pour dissoudre une molasse est déterminée, les boues sidérurgiques séchées sont mélangées dans un mélangeur entre 20-30 minutes et ensuite, la poussière de désulfuration ou la poussière du mélange du four de désulfuration et à poche est ajoutée comme liant dans un rapport de 5-25 % en poids, tout en poursuivant le processus de mélange, la solution aqueuse de mélasse qui a été préparée au préalable et qui sert de liant, est ajoutée au mélange et ce dernier est mélangé dans le mélangeur pendant encore 10 minutes dans un rapport de 5-10 % en poids, l'assemblage de briquettes préparé est chargé dans la machine à briqueter avec presse à rouleaux, dans laquelle la pression de la machine à briqueter avec presse à rouleaux est ajustée à 150-170 bars, la vitesse de rotation est ajustée à 15 tr/min et la position du commutateur de l'orifice d'alimentation (1) de la machine est ajustée à 2 cm, et les briquettes produites (2) sont isolées pour les sécher dans l'atmosphère.

2. Procédé selon la revendication 1, dans lequel les briquettes (2) ont une hauteur de 15 mm, une largeur de 25 mm et une longueur de 35 mm.

3. Procédé selon la revendication 1 ou 2, dans lequel les briquettes sont soumis à un processus de séchage à l'air libre pendant 3-4 semaines.
